# FASCICULE DE BREVET EUROPEEN

(11) **EP 2 084 879 B1**
(45) Date de publication et mention de la délivrance du brevet: **26.11.2014**
(21) Numéro de dépôt: 07820986.3
(22) Date de dépôt: 05.10.2007
(51) Int. Cl.: H04L 29/06, G06F 21/00

(54) **SYSTEME SECURISE POUR TRANSFERER DES DONNEES ENTRE DEUX EQUIPEMENTS**
GESICHERTES SYSTEM ZUM TRANSFER VON DATEN ZWISCHEN ZWEI GERÄTEN
SECURED SYSTEM FOR TRANSFERRING DATA BETWEEN TWO EQUIPMENTS

(30) Priorité: 06.10.2006 FR 0608788
(43) Date de publication de la demande: 05.08.2009
(73) Titulaire: THALES, 92200 Neuilly sur Seine (FR)
(72) Inventeur: ALCOUFFE, Fabien, 92700 Colombes (FR); WEBER, Eric, 95830 Cormeilles en Vexin (FR); QUENTIN, Antoine, 92160 Antony (FR)
(74) Mandataire: Dudouit, Isabelle
(86) Numéro de dépôt international: PCT/EP2007/060613
(87) Numéro de publication internationale: WO 2008/040811

(56) Documents cités:
- WO-A-96/30840
- WO-A-2005/119462
- TENIX PTY LIMITED: "Interactive Link Data Diode"[Online] 4 mai 2006 (2006-05-04), page 1, XP002444389 Internet Extrait de l'Internet: URL:http://www.tenix.com/Main.asp?ID=908> [extrait le 2007-07-26]
- TENIX DATAGATE PTY LTD: "Network Separation for Information Asset Protection White Paper"[Online] 2002, XP002444390 Internet Extrait de l'Internet: URL:http://www.tenix.com/PDFLibrary/131.pd f> [extrait le 2007-07-26]

## Description

L'invention concerne un système sécurisé pour le transfert d'informations entre deux équipements (nommés arbitrairement A et B). Le système est monodirectionnel dans le sens 'A vers B' et assure ainsi la non-transmission (volontaire ou non) d'informations physiques et/ou logiques de 'B vers A'.

Le système sécurisé est, par exemple, utilisé entre deux équipements ayant des niveaux de confidentialité différents afin de permettre des transferts dans un sens tout en prévenant d'éventuelles fuites d'informations dans le sens opposé.

Une application possible mais non limitative de l'invention est son intégration au sein d'un câble destiné à interconnecter deux ordinateurs de manière monodirectionnelle.

Elle s'applique dans tout système où l'on souhaite restreindre la circulation ou la transmission d'informations dans un sens.

Le traitement d'informations sensibles conduit parfois à cloisonner les systèmes. De manière pratique, ces cloisonnements soulèvent des problèmes lorsqu'il s'agit d'échanger des informations entre ces systèmes.

Il est cependant parfois toléré d'effectuer des échanges d'information dans un sens précis alors que les échanges dans l'autre sens sont prohibés.

Par exemple, dans le domaine de la défense, on tolère la circulation des informations d'un équipement de niveau de sécurité bas vers un équipement ayant un niveau de sécurité plus élevé alors que les échanges dans le sens opposé sont interdits.

Dans un autre cas d'application, une société veut pouvoir mettre à disposition des ressources à des utilisateurs par Internet en évitant tout risque d'attaques remontant d'Internet vers le réseau société (par exemple la diffusion de virus).

Il existe aussi dans le commerce des dispositifs réalisant des conversions de protocoles (par exemple, les convertisseurs USB vers Ethernet, RJ 12, RS232, IR, Bluetooth, SCSI, DB 15)

Il existe aussi des câbles d'interconnexion entre équipements informatiques constituant un lien entre ces équipements permettant la diffusion bidirectionnelle de données.

On trouve aussi de nombreuses solutions logicielles permettant de filtrer les transferts d'informations, tels les logiciels de Pare-feu. Cependant, ces solutions n'assurent pas une monodirectionalité physique et présentent comme risque la possibilité d'outre passer la protection.

Bien qu'elles puissent être efficaces, les solutions de l'art antérieur présentent des inconvénients dont certains sont présentés ci-après.

Les solutions de transfert monodirectionnel à base d'interfaces Ethernet sont conçues pour interconnecter des réseaux. Pour cela, elles nécessitent généralement la mise en place d'un certain nombre d'équipements tels que des serveurs (chargés de supporter l'importante charge logicielle provoquée par la mise à disposition de services à l'ensemble des utilisateurs d'un réseau) ; cela rend ces solutions volumineuses et coûteuses.

Chaque application utilisant son propre protocole, il est nécessaire de gérer l'adaptation monodirectionnelle de chacun d'entre eux en particulier.

De manière plus générale, leur volume, leur coût et leur complexité font de ces solutions une réponse peu adaptée à une liaison entre deux postes uniquement.

De plus, ces solutions dans leur fonctionnement normal, sont connectées, de chaque côté, au niveau du réseau et non du poste. Dans le cas où l'on met en oeuvre ces solutions pour une liaison monodirectionnelle au poste, on utilise l'interface souvent unique Ethernet de celui-ci. Il n'est alors plus possible d'être à la fois connecté au réseau local et à la solution.

Le document D1 de Tenix PTY Limited intitulé « Interactive Link Data Diode » XP 2444389 décrit une diode d'infrastructure, c'est-à-dire destinée à connecter deux réseaux qui n'est pas destinée à une utilisation entre deux postes.

Le document D2 de Tenix intitulé « Network Séparation for Information Asset Protection White Paper » XP2444390 présente une architecture dans laquelle l'utilisation d'un élément assurant la monodirectionnalité des flux est sujette à l'utilisation de serveurs de part et d'autre. Ceci n'est pas possible dans le cas d'une liaison entre deux postes.

Le document D4 WO 2005/119462 divulgue un système pour relâcher de manière sélective une information d'un calculateur d'un réseau vers un autre calculateur d'une classification inférieure. Une opération de commande permet d'effectuer ce « relâchement » d'information.

Le document D3 WO 96/30840 divulgue un moyen pour contrôler les flux d'informations entre un premier réseau qui a un niveau de classification donné plus élevé que le niveau de classification d'un deuxième réseau et qui comporte un commutateur pour permettre le fonctionnement du système à deux états.

L'invention repose, notamment, sur une adaptation de protocole au sein de la liaison entre les deux équipements. On part d'un protocole par exemple bidirectionnel, tel que le protocole USB ou tout autre protocole, permettant le transfert des données, ce protocole est adapté en un protocole monodirectionnel, celui que l'on souhaite.

Tout protocole utilisé dans le domaine des transmissions d'informations peut être utilisé.

L'idée de la présente invention consiste notamment, à fournir un système se présentant, par exemple, sous forme d'un câble équipé de connecteurs USB ou en anglo-saxon « firewire » ou de tout autre connectique permettant le branchement sur un équipement, assurant à la fois le transfert monodirectionnel des informations et la compatibilité au niveau des protocoles d'échanges utilisés par les équipements.

L'invention concerne un dispositif permettant de connecter au moins deux postes informatiques, un premier poste informatique ayant un niveau de confidentialité A et un deuxième poste informatique ayant un niveau de confidentialité B, les deux postes informatiques dialoguant avec l'extérieur en utilisant un protocole bidirectionnel USB caractérisé en ce qu'il comporte au moins les éléments suivants :
- un support permettant la transmission des données entre le premier poste informatique A et le deuxième poste informatique B,
- un moyen de connexion USB du support avec l'équipement A et un moyen de connexion USB du support avec l'équipement B, les données transmises par le poste A transitent via la connexion USB jusqu'à un module de gestion USB,
- des modules A et B permettant l'adaptation monodirectionnelle du protocole de transmission utilisé, et la transmission des données dans un sens monodirectionnel,
- ledit module A permettant l'adaptation monodirectionnelle du protocole bidirectionnel de transmission utilisé, et la transmission des données dans un sens monodirectionnel comprend :
   - un premier module adapté à réaliser les adaptations logiques du protocole bidirectionnel en un protocole monodirectionnel, et
   - un deuxième module module adapté à réaliser l'adaptation physique des protocoles, et
   - un émetteur E, et
- en ce que le module B permettant l'adaptation bidirectionnelle du protocole monodirecteinnel de transmission utilisé et la transmission des données dans un sens monodirectionnel comprend, :
   - un premier module d'adaptation logique du protocole monodirectionnel en un protocole bidirectionnel et
   - un deuxième module d'adaptation physique comprenant un récepteur R,
- lesdites communications sont bidirectionnelles entre le module de gestion du protocole et lesdits premiers modules,
- lesdites communications sont monodirectionnelles entres lesdits premiers modules et lesdits deuxièmes modules.

Le protocole de transmission est un protocole bidirectionnel de type USB, le support de transmission comporte un câble comprenant à chacune de ses extrémités un connecteur USB.

L'invention concerne aussi un procédé permettant de connecter au moins deux postes informatiques, un premier poste informatique ayant un niveau de confidentialité A et un deuxième poste informatique ayant un niveau de confidentialité B, les deux postes informatiques dialoguant avec l'extérieur en utilisant un protocole caractérisé en ce qu'il comporte au moins une étape de transmission des données du premier poste de niveau de confidentialité A vers le deuxième poste de niveau de confidentialité B à travers un module d'adaptation de protocole traduisant un protocole bidirectionnele en un protocole monodirectionnel utilisé pour le transfert des données.

Le dispositif selon l'invention assure notamment l'absence de fuites d'informations de l'équipement B vers l'équipement A. Le système offre une solution portative et un faible encombrement.

Dans le cas d'un câble, elle utilise les ports USB et/ou Firewire des postes informatiques auxquels elle est connectée, ce qui laisse libre l'accès aux autres ports, par exemple les ports Ethernet.

La compatibilité avec les protocoles utilisés (USB ou firewire ou de tout autre protocole permettant le branchement sur un équipement) est complète et ne nécessite donc aucune modification des équipements dès lors qu'ils gèrent ce protocole.

Elle est plus simple à mettre en place que les systèmes alternatifs connus de l'art antérieur et ne requiert pas de spécialiste pour son installation ou son administration.

D'autres caractéristiques et avantages de la présente invention apparaîtront mieux à la lecture de la description qui suit, donnée à titre illustratif et nullement limitatif annexée des figures qui représentent :
- La figure 1, un agencement du dispositif selon l'invention,
- La figure 2, différents modules pouvant être intégrés dans le dispositif selon l'invention, et
- La figure 3, une variante de mise en oeuvre de l'invention.

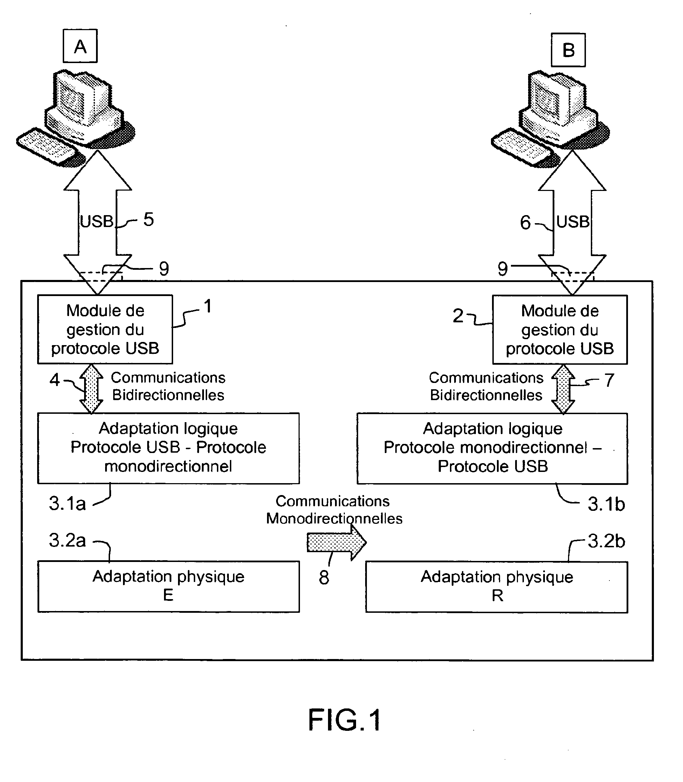

La figure 1 illustre la connexion de deux postes informatiques (poste A et poste B) au moyen d'un câble implémentant l'invention et utilisant des interfaces USB. Le câble est équipé d'un dispositif 10 assurant d'une part le respect des protocoles utilisés pour la connexion du câble aux postes informatiques (ici le protocole USB des deux cotés) et d'autre part la circulation des informations de manière monodirectionnelle du poste A vers le poste B. La transmission monodirectionnelle est assurée par le fait qu'un des modules 3.2a est équipé d'un émetteur E et que l'autre 3.2b est équipé d'un récepteur R.

Le dispositif comprend différents modules :
[1] Un module de gestion 1 du protocole bidirectionnel avec le poste A, assurant le fonctionnement standard du protocole bidirectionnel USB entre le câble 5 et le poste A. Ce module gère notamment les acquittements nécessaires au bon fonctionnement du protocole.
[2] Un module de gestion 2 du protocole bidirectionnel avec le poste B assurant le fonctionnement standard du protocole bidirectionnel USB entre le câble 6 et le poste B.
[3] Deux modules 3a, 3b ayant pour fonction une adaptation monodirectionnelle de ces deux protocoles entre les deux modules de gestion 1, 2 cités ci dessus.

Le module 3a comprend par exemple un premier module 3.1 a ayant pour fonction de réaliser les adaptations logiques protocole USB, par exemple, protocole monondirectionnel ; et un module 3.2a ayant pour fonction l'adaptation physique des protocoles. Ce module 3.2a comprend un émetteur E.

Le module 3b comprend, de manière identique, un module 3.1 b d'adaptation logique du protocole monodirectionnel en un protocole USB ou encore en un protocole bidirectionnel et un module 3.2b d'adaptation physique comprenant un récepteur R.

Les communications sont bidirectionnelles, 4, entre le module de gestion du protocole USB et le module 3.1, monodirectionnelle, 7, entre le module 3.1 et le module 3.2 et bidirectionnelles, 8, entre le module 3.2 et le module de gestion 2 du protocole USB.

Des connecteurs de type USB, 9, dans cet exemple de réalisation équipent les câbles 5 et 6.

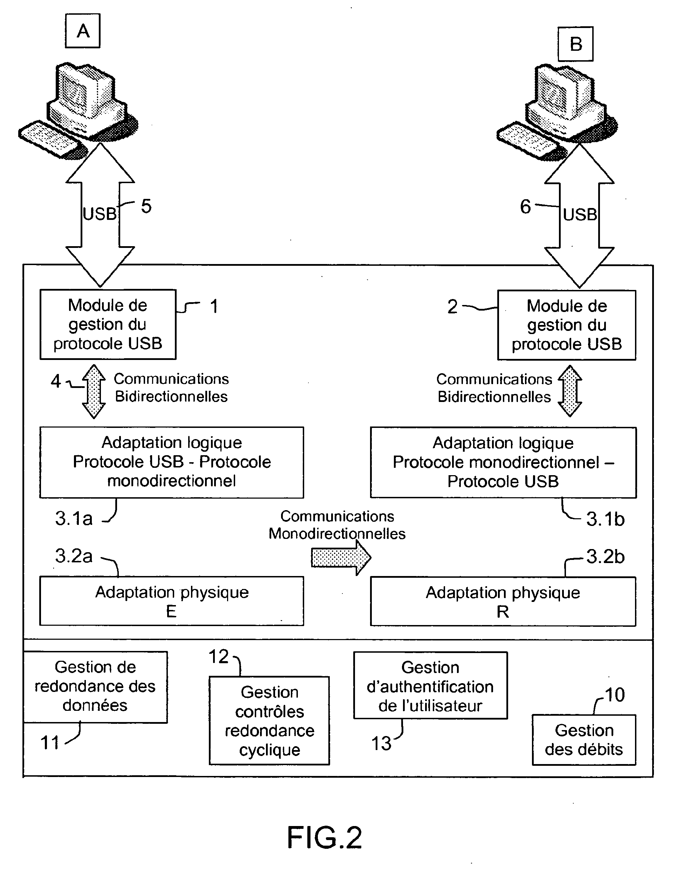

En plus de ces modules, on peut trouver un certain nombre de modules, représentés fonctionnellement sur la figure 2 et offrant certaines ou plusieurs des fonctions suivantes :
- Un module 10 de gestion des débits au niveau de l'adaptation 'Protocole USB - Protocole monodirectionnel' permettant de limiter le débit de la liaison monodirectionnelle en 'demandant' au poste bas de réduire le débit sur la liaison USB,
- Un module 11 de gestion de redondance des données transmises afin de diminuer les probabilités de mauvaise transmission (ou de non-transmission) des données au sein de la liaison monodirectionnelle,
- Un module 12 de gestion de contrôles de redondance cyclique (de type CRC) permettant une vérification de l'intégrité des données reçues au niveau du module 'Adaptation Protocole monodirectionnel - protocole USB',
- Un module 13 de gestion d'authentification de l'utilisateur.

L'alimentation du système selon l'invention est effectuée, soit par l'utilisation d'une source extérieure, soit en utilisant les sources d'alimentation disponibles via les interfaces utilisées (par exemple, utilisation des alimentations dispensées par les bus USB).

Une fois le câble 5, 6 connecté au poste A d'une part et au poste B d'autre part, le système fonctionne de la manière décrite ci-après (cas de l'utilisation de l'invention au sein d'un câble utilisant des interfaces USB pour établir une liaison monodirectionnelle entre deux postes informatiques A et B dans le sens poste A vers poste B).

Les données transmises par le poste A transitent via la connexion USB 5 jusqu'au module de gestion USB 2 sur le câble.

Ensuite, le module d'adaptation de protocole USB vers un protocole monodirectionnel 3.1 a, fait transiter ces données vers le module d'adaptation de protocole monodirectionnel 3.1b vers le protocole USB. Ceci peut se faire de plusieurs manières différentes (dont certaines sont données à titre d'exemples et non limitatives) :
- Récupération des trames USB qui sont transmises telle quelle sans modification par le module d'adaptation,
- Réencapsulation des trames USB dans un protocole propriétaire ou non (mais nécessairement monodirectionnel) pour une émission à travers la liaison monodirectionnelle,
- Récupération des données seules (sans les informations liées au protocole USB) pour une émission telle quelle à travers la liaison monodirectionnelle,
- Réencapsulation des données seules (sans les informations liées au protocole USB) dans un protocole propriétaire ou non (mais nécessairement monodirectionnel) pour une émission à travers la liaison monodirectionnelle.

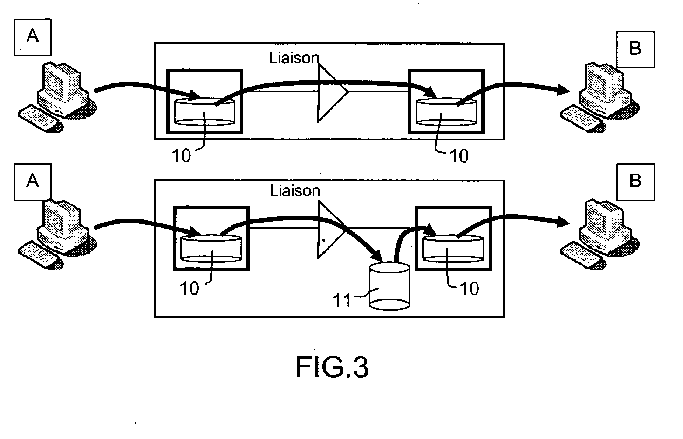

Ces actions peuvent être effectuées à la volée (utilisation de mémoires tampons uniquement référencées 10 sur la figure 3) ou en plusieurs temps via un passage des données par des mémoires intermédiaires référencé 11. Enfin, les données ainsi réceptionnées par le module d'adaptation 'protocole monodirectionnel - protocole USB' sont émises vers le module de gestion USB qui se charge alors de les transmettre vers le poste B en respectant le protocole USB.

Les deux modules de gestion du protocole USB ont également la charge de gérer la reconnaissance du câble par les deux postes A et B.

Sans sortir du cadre de l'invention, le procédé et le dispositif décrit ci-dessus s'appliquent dans tout système qui requiert le transfert des informations dans un sens déterminé et une adaptation du protocole utilisé pour la transmission d'informations.

L'invention peut s'appliquer dans le cas de système mettant en oeuvre une conversion optique du signal émis du poste informatique A vers le poste informatique B. Dans ce cas, le boîtier 3.2a est équipé d'un émetteur optique et boîtier 3.2b est équipé d'un récepteur optique, le support de transmission est constitué d'une fibre optique.

## Revendications

1. Dispositif permettant de connecter au moins deux postes informatiques, un premier poste ayant un niveau de confidentialité A et un deuxième poste ayant un niveau de confidentialité B, les deux postes informatiques dialoguant avec l'extérieur en utilisant un protocole bidirectionnel USB **caractérisé en ce qu'**il comporte au moins les éléments suivants :
• un support permettant la transmission des données entre le premier poste informatique A et le deuxième poste informatique B,
• un moyen de connexion USB (5) du support avec l'équipement A et un moyen de connexion USB (6) du support avec l'équipement B, les données transmises par le poste A transitent via la connexion USB (5) jusqu'à un module de gestion USB (1),
• des modules A et B (3a, 3b) permettant l'adaptation monodirectionnelle du protocole bidirectionnel de transmission utilisé, et la transmission des données dans un sens monodirectionnel,
• ledit module A (3a) permettant l'adaptation monodirectionnelle du protocole bidirectionnel de transmission utilisé, et la transmission des données dans un sens monodirectionnel comprend :
• un premier module (3.1a) adapté à réaliser les adaptations logiques du protocole bidirectionnel en un protocole monodirectionnel, et
• un deuxième module (3.2a) adapté à réaliser l'adaptation physique des protocoles
• un émetteur E et
• le module (3b) permettant l'adaptation bidirectionnelle du protocole monodirectionnel de transmission utilisé et la transmission des données dans un sens monodirectionnel comprend :
• un premier module (3.1b) d'adaptation logique du protocole monodirectionnel en un protocole bidirectionnel, et
• un deuxième module (3.2b) d'adaptation physique comprenant un récepteur R,
• lesdites communications sont bidirectionnelles, (4, 7), entre le module de gestion du protocole et lesdits premiers module (3.1 a, 3.1 b),
• lesdites communications sont monodirectionnelles, (8), entre lesdits premiers modules (3.1a, 3.1b) et lesdits deuxièmes modules (3.2a, 3.2b).

2. Dispositif selon la revendication 1 **caractérisé en ce que** le module d'adaptation de protocole USB vers un protocole monodirectionnel (3.1a) est adapté à faire transiter les données vers le module d'adaptation de protocole monodirectionnel (3.1b) vers le protocole USB en utilisant une des méthodes suivantes :
- Récupération des trames USB qui sont transmises telle quelle sans modification par le module d'adaptation,
- Réencapsulation des trames USB dans un protocole monodirectionnel pour une émission à travers la liaison monodirectionnelle,
- Récupération des données seules (sans les informations liées au protocole USB pour une émission telle quelle à travers la liaison monodirectionnelle,
- Réencapsulation des données seules ssans les informations liées au protocole USBs dans un protocole monodirectionnel pour une émission à travers la liaison monodirectionnelle.

3. Dispositif selon la revendication 1, **caractérisé en ce que** le protocole de transmission est un protocole bidirectionnel de type USB, le support comporte un câble comprenant à chacune de ses extrémités un connecteur USB.

4. Dispositif selon la revendication 3, **caractérisé en ce que** l'ensemble comprend un module (10) de gestion des débits au niveau de l'adaptation « Procotocole USB-Protocole monodirectionnel ».

5. Dispositif selon l'une des revendications 1 à 3, **caractérisé en ce que** le support de transmission est pourvu d'un module (11) de gestion de redondance des données transmises.

6. Dispositif selon l'une des revendications 1 à 3, **caractérisé en ce qu'**il comprend un module (12) de gestion de contrôle de redondance cyclique.

7. Dispositif selon l'une des revendications 1 à 3, **caractérisé en ce qu'**il comprend un module (13) de gestion d'authentification des utilisateurs.

8. Procédé mis en oeuvre dans un dispositif selon l'une des revendications 1 à 7, permettant de connecter au moins deux postes informatiques, un premier poste informatique ayant un niveau de confidentialité A et un deuxième poste informatique ayant un niveau de confidentialité B, les deux équipements dialoguant avec l'extérieur en utilisant un protocole, **caractérisé en ce qu'**il comporte au moins une étape de transmission des données du poste informatique de niveau de confidentialité A vers le deuxième poste ayant un niveau de confidentialité B à travers un module d'adaptation de protocole traduisant un protocole bidirectionnel en un protocole monodirectionnel utilisé pour le transfert des données.

9. Procédé selon la revendication 8, **caractérisé en ce que** l'on utilise comme protocole, le protocole USB et **en ce qu'**il comporte au moins les étapes suivantes :
- Récupération des trames USB qui sont transmises telle quelle sans modification par le module d'adaptation,
- Réencapsulation des trames USB dans un protocole propriétaire ou non pour une émission à travers la liaison monodirectionnelle,
- Récupération des données seules (sans les informations liées au protocole USB) pour une émission telle quelle à travers la liaison monodirectionnelle,
- Réencapsulation des données seules (sans les informations liées au protocole USB) dans un protocole monodirectionnel pour une émission à travers la liaison monodirectionnelle.

## Patentansprüche

1. Vorrichtung, die die Verbindung von mindestens zwei EDV-Stellen, einer ersten Stelle mit einem Vertraulichkeitsniveau A und einer zweiten Stelle mit einem Vertraulichkeitsniveau B, erlaubt, wobei die zwei EDV-Stellen mit der Außenwelt mit Hilfe eines zweidirektionalen USB-Protokolls im Dialog stehen, **dadurch gekennzeichnet, dass** sie mindestens die folgenden Elemente aufweist:
• einen Träger, der die Übertragung der Daten zwischen der ersten EDV-Stelle A und der zweiten EDV-Stelle B erlaubt,
• ein USB-Verbindungsmittel (5) des Trägers mit dem Gerät A und ein USB-Verbindungsmittel (6) des Trägers mit dem Gerät B, wobei die von der Stelle A übertragenen Daten über die USB-Verbindung (5) zu einem USB-Verwaltungsmodul (1) laufen,
• wobei die Module A und B (3a, 3b) die eindirektionale Anpassung des verwendeten zweidirektionalen Übertragungsprotokolls und die Übertragung der Daten in eine eindirektionale Richtung erlauben,
• wobei das Modul A (3a), das die eindirektionale Anpassung des verwendeten zweidirektionalen Übertragungsprotokolls und die Übertragung der Daten in eine eindirektionale Richtung erlaubt, umfasst:
• ein erstes Modul (3.1a), das für die Durchführung der logischen Anpassungen des zweidirektionalen Protokolls an ein eindirektionales Protokoll ausgebildet ist, und
• ein zweites Modul (3.2a), das für die Durchführung der physikalischen Anpassung der Protokolle ausgebildet ist,
• einen Sender E und
• wobei das Modul (3b), das die zweidirektionale Anpassung des verwendeten eindirektionalen Übertragungsprotokolls und die Übertragung der Daten in eine eindirektionale Richtung erlaubt, umfasst:
• ein erstes Modul (3.1b) für die logische Anpassung des eindirektionalen Protokolls an ein zweidirektionales Protokoll, und,
• ein zweites Modul (3.2b) für die physikalische Anpassung, das einen Empfänger R umfasst,
• wobei die Kommunikationen zwischen dem Protokollverwaltungsmodul und den ersten Modulen (3.1a, 3.1b) zweidirektional sind (4, 7),
• wobei die Kommunikationen zwischen den ersten Modulen (3.1a, 3.1b) und den zweiten Modulen (3.2a, 3.2b) eindirektional sind (8).

2. Vorrichtung nach Anspruch 1, **dadurch gekennzeichnet, dass** das USB-Protokollanpassungsmodul an ein eindirektionales Protokoll (3.1a) ausgebildet ist, um die Daten zu dem eindirektionalen Protokollanpassungsmodul (3.1b) mittels des USB-Protokolls bei Nutzung einer der folgenden Methoden zu führen:
- Rückgewinnung der USB-Frames, die von dem Anpassungsmodul unverändert so wie sie sind übertragen werden,
- Wiedereinkapselung der USB-Frames in ein eindirektionales Protokoll für eine Sendung über die eindirektionale Verbindung,
- Rückgewinnung nur der Daten (ohne die mit dem USB-Protokoll verbundenen Informationen für eine Sendung so wie sie ist über die eindirektionale Verbindung),
- Wiedereinkapselung nur der Daten ohne die mit dem USB-Protokoll verbundenen Informationen in ein eindirektionales Protokoll für eine Sendung über die eindirektionale Verbindung.

3. Vorrichtung nach Anspruch 1, **dadurch gekennzeichnet, dass** das Übertragungsprotokoll ein zweidirektionales Protokoll vom Typ USB ist, wobei der Träger ein Kabel aufweist, das an jedem seiner Enden einen USB-Stecker umfasst.

4. Vorrichtung nach Anspruch 3, **dadurch gekennzeichnet, dass** die Gruppe auf der Ebene der Anpassung "USB-Protokoll - eindirektionales Protokoll" ein Durchsatzverwaltungsmodul (10) umfasst.

5. Vorrichtung nach einem der Ansprüche 1 bis 3, **dadurch gekennzeichnet, dass** der Übertragungsträger mit einem Redundanzverwaltungsmodul (11) für die übertragenen Daten ausgestattet ist.

6. Vorrichtung nach einem der Ansprüche 1 bis 3, **dadurch gekennzeichnet, dass** sie ein Verwaltungsmodul (12) für die Kontrolle zyklischer Redundanz umfasst.

7. Vorrichtung nach einem der Ansprüche 1 bis 3, **dadurch gekennzeichnet, dass** sie ein Verwaltungsmodul (13) für die Authentifizierung der Benutzer umfasst.

8. Verfahren, das in einer Vorrichtung nach einem der Ansprüche 1 bis 7 umgesetzt wird, die erlaubt, mindestens zwei EDV-Stellen, eine erste EDV-Stelle mit einem Vertraulichkeitsniveau A und eine zweite EDV- Stelle mit einem Vertraulichkeitsniveau B, zu verbinden, wobei die zwei Geräte mit der Außenwelt mit Hilfe eines Protokolls im Dialog stehen, **dadurch gekennzeichnet, dass** es mindestens einen Datenübertragungsschritt von der EDV-Stelle mit dem Vertraulichkeitsniveau A zu der zweiten Stelle mit einem Vertraulichkeitsniveau B über ein Protokollanpassungsmodul erlaubt, das ein zweidirektionales Protokoll in ein für die Datenübertragung verwendetes eindirektionales Protokoll übersetzt.

9. Verfahren nach Anspruch 8, **dadurch gekennzeichnet, dass** als Protokoll das USB-Protokoll verwendet wird und dass es mindestens die folgenden Schritte umfasst:
- Rückgewinnen der USB-Frames, die von dem Anpassungsmodul unverändert so wie sie sind übertragen werden,
- Wiedereinkapseln der USB-Frames in ein proprietäres oder nichtproprietäres Protokoll für eine Sendung über die eindirektionale Verbindung,
- Rückgewinnen nur der Daten (ohne die mit dem USB-Protokoll verbundenen Informationen) für eine Sendung so wie sie ist über die eindirektionale Verbindung,
- Wiedereinkapseln nur der Daten (ohne die mit dem USB-Protokoll verbundenen Informationen) in ein eindirektionales Protokoll für eine Sendung über die eindirektionale Verbindung.

## Claims

1. A device making it possible to connect at least two items of equipment, a first item of equipment having a confidentiality level A and a second item of equipment having a confidentiality level B, the two items of equipment dialoguing with the exterior using a bidirectional USB protocol **characterized in that** it comprises at least the following elements:
• a medium allowing the transmission of data between the first item of equipment A and the second item of equipment B,
• a USB means (5) for connecting the medium with the item of equipment A and a USB means (6) for connecting the medium with the item of equipment B, the data transmitted by the item A pass via the USB connexion (5) to a USB management module (1),
• modules A and B (3a, 3b) allowing the monodirectional adaptation of the bidirectional transmission protocol used, and the transmission of the data monodirectionally,
• said module A (3a) allowing the monodirectional adaptation of the bidirectional transmission protocol used, and the transmission of data monodirectionally comprises:
• a first module (3.1 a) suitable for carrying out the logical adaptations of the bidirectional protocol to a monodirectional protocol, and
• a second module (3.2a) suitable for carrying out the physical adaptation of the protocols
• a sender E and
• the module (3b) allowing the bidirectional adaptation of the monodirectional transmission protocol used and the transmission of data monodirectionnally comprises:
• a first module (3.1b) for the logical adaptation of the monodirectional protocol into a bidirectional protocol, and
• a second module (3.2b) for physical adaptation comprising a receiver R,
• said communications are bidirectional , (4, 7), between the management module of protocol and said first modules (3.1 a, 3.1 b)
• said communications are monodirectional, (8), between said first modules (3.1 a, 3.1 b) and said second modules (3.2a, 3.2b).

2. The device as claimed in claim 1, **characterized in that** the adaptation module of the USB protocol into a monodirectional protocol (3.1 a) is suitable for forwarding data towards the adaptation module of monodirectional protocol (3.1 b) towards the USB protocol using one of the following methods:
- Recovery of the USB frames which are transmitted as is without modification by the adaptation module,
- Re-encapsulation of the USB frames in a monodirectional protocol for sending through the monodirectional link,
- Recovery the data alone (without the information related to the USB protocol) for sending as is through the monodirectional link,
- Re-encapsulation of the data alone without the information related to the USB sending protocol in a monodirectional protocol for sending through the monodirectional link.

3. The device as claimed in claim 1, **characterized in that** the transmission protocol is a bidirectional protocol of USB type, the medium comprises a cable comprising a USB connector at each of its ends.

4. The device as claimed in claim 3, **characterized in that** the assembly comprises a module (10) for managing the bit rates at the level of the "USB protocol-Monodirectional protocol" adaptation.

5. The device as claimed in one of claims 1 to 3, **characterized in that** the transmission medium is provided with a module (11) for the redundancy management of the transmitted data.

6. The device as claimed in one of claims 1 to 3, **characterized in that** it comprises a cyclic redundancy check management module (12).

7. The device as claimed in one of claims 1 to 3, **characterized in that** it comprises a user authentication management module (13).

8. A method implemented in a device as claimed in one of claims 1 to 7, making it possible to connect at least two items of equipment, a first item of equipment having a confidentiality level A and a second item of equipment having a confidentiality level B, the two items of equipment dialoguing with the exterior using a protocol, **characterized in that** it comprises at least one step of transmitting the data from the item of equipment having a confidentialty level A to the second item having a confidentiality level B through an adaptation module of protocol for adapting the bidirectional protocol to the monodirectional protocol used for the data transfer.

9. The method as claimed in claim 8, **characterized in that** the USB protocol is used as protocol and **in that** it comprises at least the following steps:
- Recovery of the USB frames which are transmitted as is without modification by the adaptation module,
- Re-encapsulation of the USB frames in a proprietary or non-proprietary protocol for sending through the monodirectional link,
- Recovery of the data alone (without the information related to the USB protocol) for sending as is through the monodirectional link,
- Re-encapsulation of the data alone (without the information related to the USB protocol) in a monodirectional protocol for sending through the monodirectional link.
